# EUROPÄISCHE PATENTANMELDUNG

(11) **EP 1 935 915 A1**
(43) Veröffentlichungstag der Anmeldung: **25.06.2008**
(21) Anmeldenummer: 06127082.3
(22) Anmeldetag: 22.12.2006
(51) Int. Cl.: C08G 59/12, C08G 59/22, C08C 19/36

(54) **Amid- oder Thioester-vorverlängerte Epoxidgruppen terminierte Zähigkeitsverbesserer und Verfahren zu deren Herstellung**

(71) Anmelder: Sika Technology AG, 6340 Baar (CH)
(72) Erfinder: Die Erfindernennung liegt noch nicht vor

(57) **Zusammenfassung**

Die vorliegende Erfindung betrifft Zähigkeitsverbesserer. Es werden funktionelle Endgruppen aufweisende terminierte Polymere vorgestellt, welche durch Polyamine, Polymercaptane, (Poly)aminoalkohole, (Poly)mercapto-alkohole oder (Poly)aminomercaptane vorverlängert werden und durch eine weitere Reaktion zu Polymeren mit anderen funktionellen Gruppen terminiert werden. Die Zähigkeitsverbesserer zeichnen sich durch einen geringen Gehalt an die Eigenschaften von Zusammensetzungen verschlechterten Edukten oder Edukt-Folgeprodukte aus und dadurch, dass die Bildung von höhermolekularen Additionsprodukte stark verringert bis ausgeschlossen wird, so dass sehr geringe Viskositäten bei guter Lagerstabilität entstehen. Als besonders bevorzugt gilt das Epoxidgruppen-terminierte Polymer der Formel (1).

## Beschreibung

### Technisches Gebiet

Die Erfindung betrifft das Gebiet der Zähigkeitsverbesserer.

### Stand der Technik

Polymere werden seit langem als Werkstoffe eingesetzt. Gewisse Polymere weisen jedoch das Problem auf, dass bei schlagartiger Schlagbeanspruchung die Polymermatrix bricht, d.h. dass ihre Schlagzähigkeit gering ist. Insbesondere Polymermatrices basierend auf Epoxidharzen sind zwar sehr fest sind aber vielfach nicht sehr schlagzäh. Deshalb wurde schon länger versucht, die Schlagzähigkeit zu verbessern.

Dies wurde beispielsweise mit der Verwendung von speziellen Copolymeren, welche als sogenannte Flüssigkautschuke bezeichnet werden, schon seit längerem versucht. Durch die Verwendung von chemisch reaktiven Gruppen, wie Hydroxyl-, Carboxyl-, Vinyl- oder Amino-Gruppen sind derartige Flüssigkautschuke chemisch in die Matrix einbaubar. So existieren beispielsweise seit langem reaktive Flüssigkautschuke Butadien/Acrylonitil-Copolymere, welche mit Hydroxyl-, Carboxyl-, Vinyl- oder Amino-Gruppen terminiert sind, welche von der Firma B.F. Goodrich, beziehungsweise Noveon, unter dem Handelsnamen Hycar® angeboten. Als Ausgangsbasis wird hierfür stets das Carboxylgruppen-terminierte Butadien/Acrylonitil-Copolymer verwendet, zu welchem üblicherweise ein starker Überschuss an einem Diamin, Diepoxid oder ein Glycidyl(meth)acrylat zugesetzt wird. Dies führt jedoch dazu, dass sich einerseits eine hohe Viskosität bildet oder andererseits dass ein sehr hoher Gehalt an unumgesetztem Diamin, Diepoxid oder Glycidyl(meth)acrylat, welches entweder aufwändig entfernt werden muss oder aber die mechanischen Eigenschaften stark negativ beeinflusst.

Es besteht jedoch vielfach der Wunsch noch weiter erhöhte Schlagzähigkeit zu erhalten und eine breitere Vielfalt an Zähigkeitsverbesserern zu haben. Eine derartige Möglichkeit in diese Richtung besteht in der Kettenverlängerung von Epoxidgruppen-terminierten Polymeren durch Bisphenole oder durch die Verwendung höher molekularer Epoxidharzen bei der Herstellung. Auch hier entstehen je nach Reaktionsführung grosse Mengen an unumgesetzten Bisphenolen oder an verlängerten Epoxidharzen, die beide schnell die Eigenschaften von Zusammensetzungen negativ beeinflussen können. Weiterhin sind derartige Addukte schnell nicht mehr flüssig, wodurch derartige Zähigkeitsverbesserer enthaltende Zusammensetzungen konsequenterweise vielfach nicht mehr prozesssicher appliziert werden können. Zudem führt die Verwendung von Bisphenolen zu verringerter Lagerstabilität.

### Darstellung der Erfindung

Aufgabe der vorliegenden Erfindung ist es daher, Zähigkeitsverbesserer mit funktionellen Endgruppen zur Verfügung zustellen, welche in der Lage sind, die Probleme des Standes der Technik zu beheben. Die Polymere gemäss der Ansprüche 1, 10, 12 und 13 stellen derartige Polymere zur Verfügung. Sie lassen sich alle aus einem Carboxylgruppen-terminierten Polymer gemäss Anspruch 10 herstellen, welches seinerseits aus einem leicht zugänglichen Carboxylgruppen-terminierten Butadien/Acrylonitril-Copolymer erhalten werden kann. Durch die Möglichkeiten, die sich aus den unterschiedlichen Molekülen zur Vorverlängerung und Terminierung ergeben, ist eine breite Palette von unterschiedlichen Zähigkeitsverbesserer möglich, und lässt sich auf die Bedürfnisse hin massschneidern. Die mit funktionellen Gruppen terminierten Polymere haben den grossen Vorteil, dass sie eine enge Molekulargewichtsverteilung sowie einen sehr hohen Anteil an als Zähigkeitsverbesserer geeigneten Molekülen aufweisen.

Dieser Vorteil entsteht insbesondere durch das Verfahren der Herstellung des Carboxylgruppen-terminierten Polymers gemäss Anspruch 10, welches als Ausgangspunkt für die Herstellung der Polymere gemäss Anspruch 1, 12 und 13 dienen und insbesondere durch das zwei Schritte umfassende Verfahren zur Herstellung eines Endgruppen-terminierten Polymers gemäss Anspruch 16. Bei diesem Verfahren gemäss Anspruch 14 ist gewährleistet, dass als allenfalls unumgesetzte Edukte lediglich bereits als Zähigkeitsverbesserer wirkende Substanzen vorhanden sind, welche bei einem allenfalls weiter zu Polymer gemäss Anspruch 1, 12 oder 13 führenden Reaktionsschritt ebenfalls zu reaktiven Zähigkeitsverbesserern reagieren. Somit werden keine oder nur unwesentliche Mengen an die Mechanik negativ beeinflussenden Verbindungen gebildet, so dass äusserst potente Zähigkeitsverbesserer zur Verfügung gestellt werden können. Trotz der vielen Möglichkeiten, die sich aus Vorverlängerung und Epoxidterminierung ergeben, sind die Polymere erstaunlich niederviskos.

Die Polymere gemäss Anspruch 1, 10, 12 und 13 lassen sich breit als Mittel zur Erhöhung der Schlagzähigkeit einer Polymermatrix gemäss Anspruch 16 verwenden. Besonders bevorzugt ist deren Einsatz in Epoxidharzmatrix.

Weitere Aspekte der Erfindung betreffen Polymere gemäss Anspruch 1, 10, 12 oder 13 enthaltende Zusammensetzungen sowie ausgehärtete Zusammensetzungen gemäss Anspruch 22 und 23.

Besonders bevorzugt werden derartige Polymere in Klebstoffen, insbesondere hitzehärtende Epoxidharzklebstoffen, eingesetzt. Sie weisen ausserordentlich gute Schlagzähigkeiten auf.

Bevorzugte Ausführungen der Erfindung sind Gegenstand der abhängigen Ansprüche.

### Wege zur Ausführung der Erfindung

Die vorliegende Erfindung betrifft in einem ersten Aspekt Epoxidgruppen-terminiertes Polymer der Formel (I).

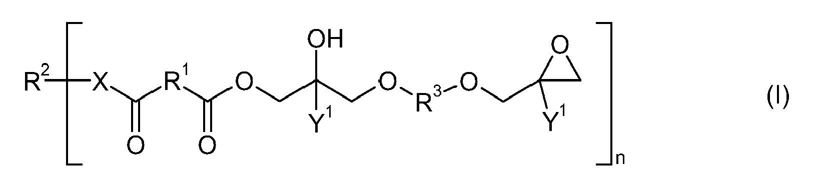

Hierbei steht R¹ für einen divalenten Rest eines Carboxylgruppen-terminierten Butadien/Acrylonitril-Copolymers CTBN nach Entfernung der terminalen Carboxylgruppen. Weiterhin steht R² für einen Rest einer n XH-Gruppen aufweisenden Verbindung XAV, welche ausgewählt ist aus der Gruppe bestehend aus Polyaminen, Polymercaptanen, (Poly)aminoalkoholen, (Poly)mercaptoalkoholen und (Poly)aminomercaptanen, nach Entfernung von n XH- Gruppen. Weiterhin steht Y¹ für H oder Methyl. R³ steht für einen Diglycidylether DGE nach Entfernung der zwei Glycidylether-Gruppen. X steht unabhängig voneinander für S, NH oder NR⁰ oder O, mit der Massgabe, dass nur ein X im Molekül für O steht, wobei R⁰ für einen Alkyl-, Cycloalkyl- oder Arylrest mit 1 bis 8 C-Atomen steht oder für einen zweiwertigen Rest, insbesondere Alkylenrest, welcher mit R² verbunden ist. Schliesslich steht n für einen Wert von 2 bis 4, insbesondere von 2.

Als "Glycidylether-Gruppe" wird hierbei die Gruppe der Formel 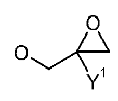 verstanden, d.h. es wird neben dem Fall, in dem Y¹ in dieser Formel für H steht, der Einfachheit halber im vorliegenden Dokument auch diejenige Gruppe der letzten Formel bezeichnet, in welcher Y¹ für Methyl steht.

Die Vorsilbe "Poly" in Substanzbezeichnungen wie "Polyol", "Polyamin" oder "Polymercaptan" weist im vorliegenden Dokument darauf hin, dass die jeweilige Substanz formal mehr als eine der in ihrer Bezeichnung vorkommenden funktionellen Gruppe pro Molekül enthält.

Insbesondere steht R¹ für einen Rest, wie er durch formelle Entfernung der Carboxyl-Gruppen eines unter dem Namen Hycar® CTBN von Noveon kommerziell vertriebenen Carboxylgruppen-terminierten Butadien/Acrylonitril-Copolymers CTBN, erhalten wird. Bevorzugt weist er eine Struktur der Formel (IV) auf.

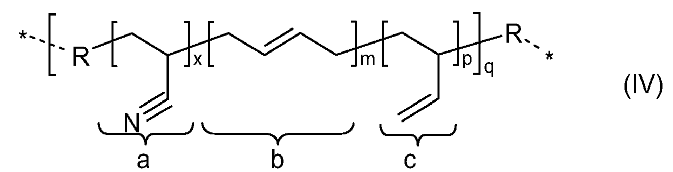

Hierbei stellen die gestrichelten Linien die Anbindungsstellen der zwei Carboxylgruppen dar. R steht für einen linearen oder verzweigten Alkylenrest mit 1 bis 6 C-Atomen, insbesondere mit 4 C-Atomen, welcher gegebenenfalls mit ungesättigten Gruppen substituiert ist. In einer besonders zu erwähnende Ausführungsform stellt der Substituent R einen Substituenten der Formel (VII) dar, wobei auch hier die gestrichelten Linie die Anbindungsstellen darstellen

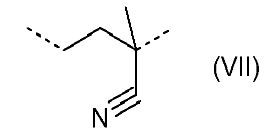

Weiterhin steht der Index q für einen Wert zwischen 40 und 100, insbesondere zwischen 50 und 90. Weiterhin stellen die Bezeichnungen b und c die Strukturelemente, welche von Butadien stammen und a das Strukturelement, welches von Acrylonitril stammt, dar. Die Indices x, m, und p stellen ihrerseits Werte dar, die das Verhältnis der Strukturelemenent a, b und c zueinander beschreiben. Der Index x steht für Werte von 0.05 - 0.3, der Index m für Werten von 0.5 - 0.8, der Index p für Werte von 0.1 - 0.2 mit der Voraussetzung, dass die Summe von x, m und p gleich 1 ist.

Dem Fachmann ist klar, dass die in Formel (IV), wie auch die im Weiteren in Formeln (V'), (V"') und(VI"') gezeigten Strukturen als vereinfachte Darstellungen zu verstehen sind. Somit können die Bausteine a, b und c, bzw. d und e oder d' und e', jeweils zufällig, abwechselnd oder blockweise zueinander angeordnet sein. Insbesondere stellt somit Formel (IV) nicht zwangsläufig ein Triblock-Copolymer dar.

Der Rest R² steht für eine Verbindung XAV, welche n XH-Gruppen aufweist und ausgewählt ist aus der Gruppe bestehend Gruppe bestehend aus Polyaminen, Polymercaptanen, (Poly)aminoalkoholen, (Poly)mercaptoalkoholen und (Poly)aminomercaptanen, nach Entfernung von n XH- Gruppen.

Es handelt sich bei der Verbindung XAV um Diamine, Triamine, Tetramine, Dimercaptane, Trimercaptane, Tetramercaptane, sowie um (Poly)aminoalkohole, (Poly)aminomercaptane sowie um (Poly)mercaptoalkohole. Das heisst als Verbindung XAV, welche n XH-Gruppen aufweist, gelten auch Verbindungen, welche gleichzeitig SH und/oder OH und/oder Aminogruppen aufweisen. Beispiele für derartige Verbindungen XAV, welche n gemischte XH-Gruppen aufweisen und als Beispiele für (Poly)aminoalkohole, (Poly)mercaptoalkohole und (Poly)aminomercaptane sind, sind Thioglycol, Dithioglycerin, Aminoethanol, 2-Aminopropanol, 3-Aminopropanol, 2-Amino-2,2-dimethylethanol, 2-Amino-1-methyl-ethanol, 2-Amino-propan-2-ol und Aminoethanthiol.

In einer Ausführungsform ist die Verbindung XAV ein Polyamin. Derartige Polyamine sind insbesondere Diamine oder Triamine, bevorzugt aliphatische oder cycloaliphatische Diamine oder Triamine.

Beispiele für Diamine sind
- Aliphatische Diamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 1,9-Nonandiamin, 1,10-Decandiamin, 1,11-Undecandiamin, 1,12-Dodecandiamin, Methyl-bis-(3-aminopropyl)-amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, 2-Methylpentamethylendiamin, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclo-hexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, Piperazin, 1-(2-Aminoethyl)piperazin, 1,3- und 1,4-Xylylendiamin;
- Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit zwei oder drei Aminogruppen, beispielsweise erhältlich unter dem Namen Jeffamine^{®} (von Huntsman Chemicals), unter dem Namen Polyetheramin (von BASF) oder unter dem Namen PC Amine^{®} (von Nitroil), sowie Mischungen der vorgenannten Polyamine.

Derartige Triamine werden beispielsweise unter der Jeffamine® T-Line von Huntsman Chemicals vertrieben, wie beispielsweise Jeffamine® T-3000, Jeffamine® T-5000 oder Jeffamine® T-403.

Bevorzugte Diamine sind Polyoxyalkylen-Polyamin mit zwei Amino-gruppen solche der Formel der Formel (V').

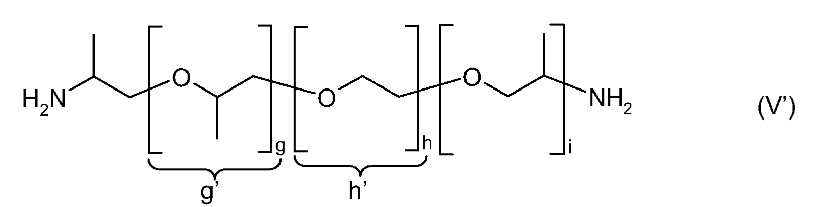

Hierbei stellen g' das Strukturelement, welches von Propylenoxid stammt, und h' das Strukturelement, welches von Ethylenoxid stammt, dar. Zudem stellen und stehen g, h und i je für Werte von 0 bis 40, mit der der Massgabe, dass die Summe von g, h und i ≥ 1 ist.

Insbesondere sind Molekulargewicht zwischen 200 und 5000 g/mol bevorzugt.

Insbesondere bevorzugt sind Jeffamine®, wie sie unter der D-Linie und ED-Linie von Huntsman Chemicals angeboten werden, wie zum Besipiel Jeffamine® D-230, Jeffamine® D-400, Jeffamine® D-2000, Jeffamine® D-4000, Jeffamine® ED-600, Jeffamine® ED-900, Jeffamine® ED-2003 oder Jeffamine® EDR-148.

In einer weiteren Ausführungsform ist die Verbindung XAV ein Polymercaptan. Als Polymercaptan sind insbesondere Dimercaptane bevorzugt.

Geeignete Polymercaptane sind beispielsweise Polymercaptocetate von Polyolen. Es handelt sich hierbei insbesondere um Polymercaptocetate der folgenden Polyolen:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 300 - 20'000 Dalton, Polyoxybutylendiole und -triole, Polyoxypropylendiole und - triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
- 1,2-Ethandiol, Diethylenglykol, 1,2-Propandiol, Dipropylenglykol, 1,4-Butandiol, 1,5-Pentandiol, 1,6-Hexandiol, 1,7-Hepandiol, Octandiol, Nonandiol, Decandiol, Neopentylglykol, Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol, Di(trimethylolpropan) (= 3-(2,2-Bis-hydroxymethyl-butoxy)-2-ethyl-2-hydroxymethyl-propan-1-ol), Di(trimethylolethan) (= 3-(3-Hydroxy-2-hydroxymethyl-2-methyl-propoxy)-2-hydroxymethyl-2-methyl-propan-1-ol), Diglycerin (= Bis-(2,3-dihydroxypropyl)-ether);
- Polyole, wie sie durch Reduktion von dimerisierten Fettsäuren enthalten werden.

Insbesondere bevorzugt sind Glycol-dimercaptoacetat, Trimethylolpropan-trimercaptoacetat und Butandiol-dimercaptoacetat.

Als meist bevorzugte Polymercaptane gelten Dimercaptane der Formel (V").

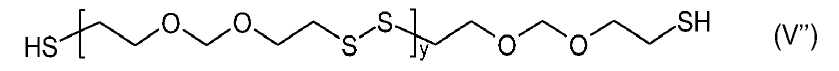

Hierbei steht y für einen Wert von 1 bis 45, insbesondere von 5 bis 23. Die bevorzugten Molekulargewichte sind zwischen 800 und 7500 g/mol, insbesondere zwischen 1000 und 4000 g/mol,.

Derartige Polymercaptane sind kommerziell erhältlich unter der Thiokol® LP-Reihe von Toray Fine Chemicals Co.

Der Rest R³ steht für einen Diglycidylether DGE nach Entfernung der zwei Glycidylether-Gruppen.

In einer Ausführungsform ist der Diglycidylether DGE ein aliphatischer oder cycloaliphatischer Diglycidylether, insbesondere ein Diglycidylether von difunktionellen gesättigten oder ungesättigten, verzweigten oder unverzweigten, zyklischen oder offenkettigen C₂ - C₃₀ Alkoholen, z.B. Ethylenglykol-, Butandiol-, Hexandiol-, Oktandioldiglycidylether, Cyclohexandimethanoldiglycidylether, Neopentylglycoldiglycidylether.

Insbesondere ist der Diglycidylether DGE einerseits ein aliphatischer oder cycloaliphatischer Diglycidylether, insbesondere ein Diglycidylether der Formel (VI") oder (VI"')

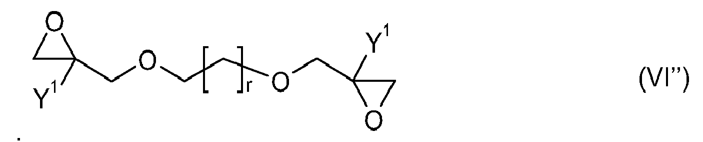

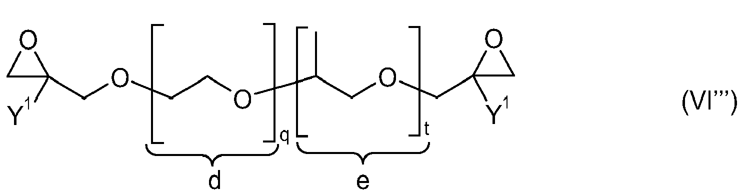

Hierbei steht r für einen Wert von 1 bis 9, insbesondere für 3 oder 5. Zudem steht q für einen Wert von 0 bis 10 und t für einen Wert von 0 bis 10, mit der Massgabe, dass die Summe von q und t ≥ 1 ist. Schliesslich stellt d das Strukturelement dar, welches von Ethylenoxid stammt, und e stellt das Strukturelement dar, welches von Propylenoxid stammt. Es handelt sich somit bei Formel (VI"') um (Poly)ethylenglycoldiglycidylether, (Poly)propylenglycoldiglycidylether und (Poly)ethylenglycol/propylenglycol-diglycidylether, wobei die Bausteine d und e blockartig, abwechselnd oder zufällig angeordnet sein können.

Besonders geeignete aliphatische oder cycloaliphatische Diglycidylether sind Ethylenglykoldiglycidylether, Butandioldiglycidylether oder Hexandioldiglycidylether.

In einer weiteren Ausführungsform ist der Diglycidylether DGE ein Epoxidharz. Das Epoxidharz kann ein sogenanntes Epoxid-Flüssigharz oder ein Epoxid-Festharz sein.

Der Begriff "Epoxid-Festharz" ist dem Epoxid-Fachmann bestens bekannt und wird im Gegensatz zu "Epoxid-Flüssigharzen" verwendet. Die Glasübergangstemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (VIII) auf

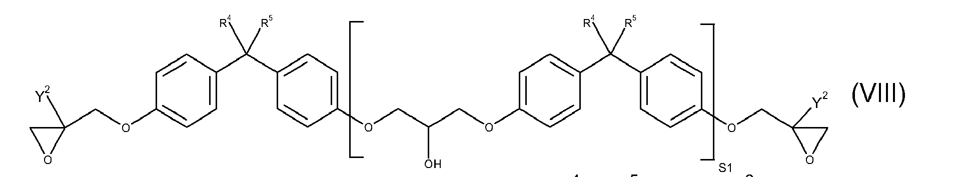

Hierbei stehen die Substituenten R⁴, R⁵ und Y² unabhängig voneinander entweder für H oder CH₃. Weiterhin steht der Index S1 für einen Wert von > 1.5, insbesondere von 2 bis 12.

In diesem Dokument ist die Verwendung des Terms "unabhängig voneinander" in Zusammenhang mit Substituenten, Resten oder Gruppen dahingehend auszulegen, dass in selben Molekül die gleich bezeichneten Substituenten, Reste oder Gruppen gleichzeitig mit unterschiedlicher Bedeutung auftreten können.

Derartige Epoxid-Festharze sind kommerziell erhältlich beispielsweise von Dow, Huntsman oder Hexion.

Verbindungen der Formel (VIII) mit einem Index S1 zwischen 1 und 1.5 werden vom Fachmann als Semisolid-Epoxidharze bezeichnet. Für die hier vorliegende Erfindung werden sie ebenfalls als Festharze betrachtet. Bevorzugt Epoxid-Festharze sind jedoch als Epoxid-Festharze im engeren Sinn, d.h. der Index S1 weist einen Wert von > 1.5 auf.

Bevorzugte Epoxid-Flüssigharze weisen die Formel (IX) auf

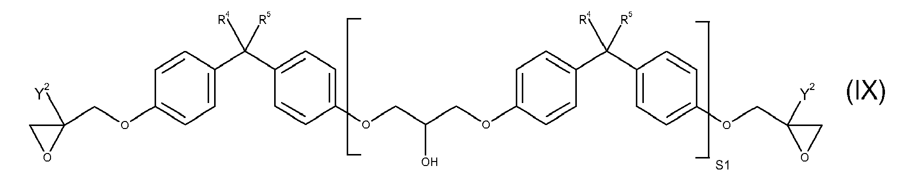

Hierbei stehen die Substituenten R⁴, R⁵ und Y² unabhängig voneinander entweder für H oder CH₃. Weiterhin steht der Index S1 für einen Wert von 0 bis 1. Bevorzugt steht S1 für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung "A/F" verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.^{™} 331 oder D.E.R.^{™} 330 (Dow) oder Epikote 828 (Hexion) erhältlich.

Weiterhin kann der Diglycidylether DGE ein sogenannter epoxidierter Novolak sein.

In einer weiteren besonders geeigneten Ausführungsform ist der Diglycidylether DGE ein Diglycidylether, welcher nach Entfernung der zwei Glycidylether-Gruppen, entsprechend dem Rest R³, die Formel (VI) oder (VI') aufweist.

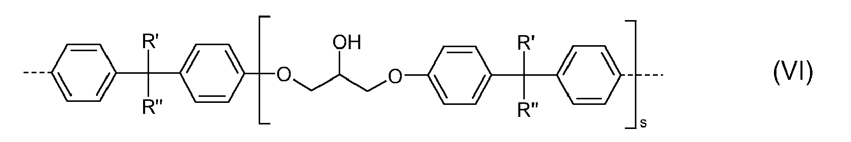

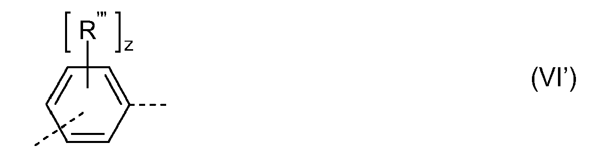

Hierbei stehen R', R" und R"' unabhängig voneinander für H, Methyl oder Ethyl, z für 0 oder 1 und s für 0 oder für einen Wert von 0.1 - 12.

Ein besonders bevorzugter Diglycidylether DGE ist Bisphenol-F-Diglycidylether.

Das Epoxidgruppen-terminiertes Polymer der Formel (I) lässt sich wie folgt herstellen:

In einem ersten Schritt ("Vorverlängerung") wird aus einem Carboxylgruppen-terminierten Butadien/Acrylonitril-Copolymer CTBN der Formel HOOC-R¹-COOH und einer XH-Gruppen aufweisenden Verbindung XAV in einem stöchiometrischen Überschuss (n' ≥ n) des HOOC-R¹-COOH ein Carboxylgruppen-terminiertes Polymer der Formel (II) hergestellt:

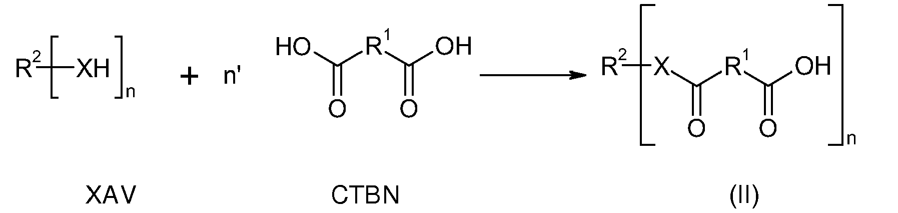

Für diese Umsetzung werden XH-Gruppen aufweisende Verbindung XAV und HOOC-R¹-COOH so in einer Menge eingesetzt, dass das stöchiometrische Verhältnis der COOH-Gruppen zu XH-Gruppen [COOH] / [XH] von ≥ 2 ist.

Ist dieses Verhältnis = 2, entsprechend n' = n, ist der Anteil von höher molekularen Spezies tendenziell erhöht, was zu stark erhöhten Viskositäten im Carboxylgruppen-terminierten Polymer der Formel (II), bzw. im Epoxidgruppen-terminierten Polymer der Formel (I), führen kann, was unter Umständen Anlass zu Problemen geben kann. Bei einem Verhältnis von < 2 (entsprechend n'<n), insbesondere von «2, wird dieses Problem sehr stark vergrössert. Deshalb ist bei diesem Verhältnis ein Wert von >2 bevorzugt. Typischerweise ist ein Verhältnis von > 4, vor allem » 2, entsprechend n' >> n, sehr bevorzugt. In diesen Fällen weist die Reaktionsmischung einen relativ grossen Gehalt an unumgesetzten HOOC-R¹-COOH auf. Dies ist jedoch nicht weiter störend, wie nachfolgend diskutiert wird.

Es ist dem Fachmann klar, dass auch Mischungen von XH-Gruppen aufweisenden Verbindung XAV und/oder Carboxylgruppen-terminierten Butadien/Acrylonitril-Copolymeren CTBN der Formel HOOC-R¹-COOH eingesetzt werden können.

In einem zweiten Schritt ("Terminierung") wird aus dem Carboxylgruppen-terminierten Polymer der Formel (II) und einem Diglycidylether DGE der Formel (III) in einem stöchiometrischen Überschuss (n" ≥ n) des Diglycidylether DGE ein Epoxidgruppen-terminiertes Polymer der Formel (I) hergestellt:

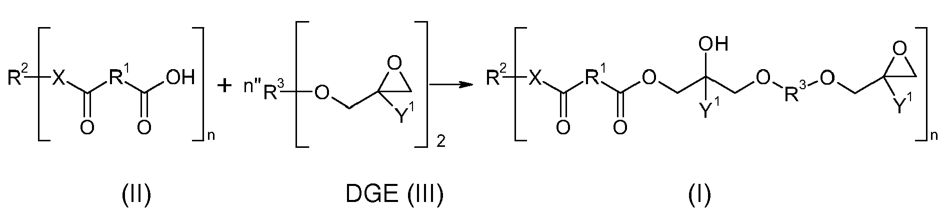

Für diese Umsetzung werden das Polymer der Formel (II) und der Diglycidylether der Formel (III) in solcher Menge zueinander eingesetzt, dass das stöchiometrischen Verhältnis der Glycidylether-Gruppen zu COOH-Gruppen 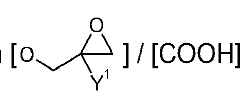 von ≥ 2 ist.

Ist dieses Verhältnis = 2, entsprechend n" = n, ist der Anteil von höher molekularen Spezies erhöht, was zu stark erhöhten Viskositäten im Epoxid-gruppen-terminierten Polymer der Formel (I), führen kann, was unter Umständen Anlass zu Problemen geben kann. Bei einem Verhältnis von < 2 (entsprechend n'<n), insbesondere von «2, wird dieses Problem sehr stark vergrössert. Deshalb ist bei diesem Verhältnis ein Wert von >2 bevorzugt. Typischerweise ist ein Verhältnis von > 4, vor allem » 2, entsprechend n" >> n, sehr bevorzugt.

Falls in der Edukt-Mischung am Anfang dieses zweiten Schrittes noch aus dem ersten Schritt unumgesetztes Carboxylgruppen-terminiertes Butadien/Acrylonitril-Copolymer CTBN HOOC-R¹-COOH vorhanden ist, wird dieses im zweiten Schritt zu einem Epoxid-Gruppen terminierten Polymer der aus dem Stand der Technik bekannten Formel (X) reagiert.

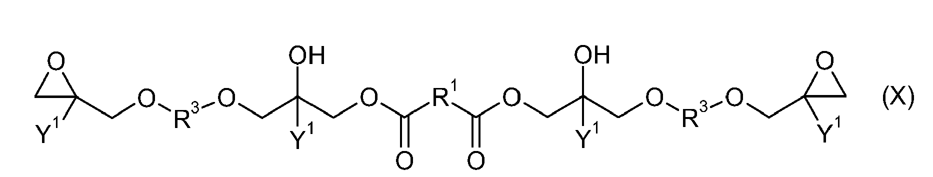

Auf diese Art und Weise kann gewährleistet werden, dass möglichst viele Epoxidgruppen-terminierte Polymere, welche als Schlagzähigkeitsmodifikatoren verwendet werden können, in der Schlussmischung vorhanden sind. Insbesondere wird entgegen dem Verfahren aus dem Stand der Technik verhindert, dass eine grosse Molekulargewichtsverteilung vorhanden ist, was zu einer Verschlechterung der Applikationseigenschafen, insbesondere einer hohen Viskosität, führt.

Es ist dem Fachmann klar, dass auch Mischungen von Carboxylgruppen-terminierten Polymeren der Formel (II) und/oder Diglycidylethern DGE der Formel (III) eingesetzt werden können. In einer derartigen Herstellungsweise entstehen in situ Mischungen von Epoxidgruppen-terminierten Polymeren der Formel (I).

Im ersten Schritt erfolgt eine Ester-, Amid- oder Thioesterbildung, während im zweiten Schritt eine Esterbildung erfolgt.

Derartige Umsetzungen von Alkohol, Amin oder Mercaptan mit Carbonsäuren, bzw. Glycidylether mit Carbonsäuren sind dem Fachmann bekannt sowie die Reaktionsbedingungen hierfür. Insbesondere kann diese Reaktion bei erhöhter Temperatur und gegebenenfalls unter dem Einfluss von Katalysatoren erfolgen.

Für die Amid-Bildung werden insbesondere hohe Temperaturen und Titanat-Katalysatoren wie n-Butyltitanat, bevorzugt. Die Entfernung des bei der Veresterung gebildeten Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann beispielsweise Luft oder Stickstoff verwendet werden.

Die Veresterung eines Poly(aminoalkohols) oder Poly(mercaptoalkohols) mit dem Carboxylgruppen-terminiertes Butadien/Acrylonitril-Copolymer CTBN erfolgt vorzugsweise bei erhöhter Temperatur und insbesondere unter dem Einfluss eines Veresterungskatalysators, insbesondere einer Säure. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des bei der Veresterung gebildeten Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann beispielsweise Luft oder Stickstoff verwendet werden.

Die Veresterung des Diglycidylethers DGE mit dem Carboxylgruppen-terminierten Polymer erfolgt vorzugsweise bei erhöhter Temperatur, typischerweise bei Temperaturen von 100°C, bevorzugt um 140°C, und gegebenenfalls unter dem Einsatz von Katalysatoren und vorzugsweise unter Schutzgas. Beispiele für derartige Katalysatoren sind Triphenylphosphin, tertiäre Amine, quaternäre Phosphoniumsalze oder quaternäre Ammoniumsalze.

Somit bilden Carboxylgruppen-terminierte Polymere der Formel (II) einen weiteren Aspekt der vorliegenden Erfindung. Die Definition, Möglichkeiten und bevorzugten Ausführungsformen der in dieser Formel (II) aufgeführten Reste und Indizes entsprechen denjenigen, wie sie in diesem Dokument bereits vorgängig für Epoxidgruppen-terminiertes Polymer der Formel (I) detailliert beschrieben wurden.

Einen weiteren Aspekt der vorliegenden Erfindung bildet ein Verfahren zur Herstellung eines Carboxylgruppen-terminierten Polymers der Formel (II) durch eine Umsetzung einer XH-Gruppen aufweisenden Verbindung XAV der Formel R²(XH)ₙ mit einem Carboxylgruppen-terminierten Butadien/Acrylonitril-Copolymer CTBN der Formel HOOC-R¹-COOH, dadurch gekennzeichnet, dass für diese Umsetzung R²(XH)ₙ und HOOC-R¹-COOH in einer Menge zueinander eingesetzt werden, das einem stöchiometrischen Verhältnis der COOH-Gruppen zu XH-Gruppen [COOH] / [XH] von ≥ 2 entspricht. Dieses Verfahren wurde im Detail bereits vorgängig in diesem Dokument beschrieben.

Einen weiteren Aspekt der vorliegenden Erfindung bildet ein Verfahren zur Herstellung eines Epoxidgruppen-terminiertes Polymer der Formel (I) durch die Umsetzung eines Carboxylgruppen-terminierten Polymers der Formel (II) mit einem Diglycidylether DGE der Formel (III), dadurch gekennzeichnet, dass für diese Umsetzung das Polymer der Formel (II) und der Diglycidylether der Formel (III) in einer Menge zueinander eingesetzt werden, das einem stöchiometrischen Verhältnis der Glycidylethergruppen zu COOH-Gruppen 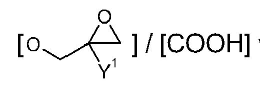 von ≥ 2 entspricht.

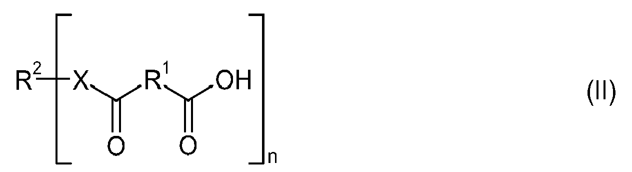

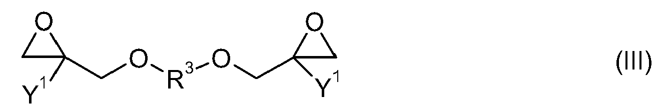

Dieses Verfahren wurde im Detail bereits vorgängig in diesem Dokument beschrieben.

Es ist dem Fachmann klar, dass die Epoxidgruppen-terminierten Polymere der Formel (I) weiter reagiert werden können. So ist insbesondere die Verlängerung mittels Polyphenolen, insbesondere mittel Bisphenolen, wie Bisphenol-A, unter Umständen sehr hilfreich, um noch höher molekularere Epoxidgruppen-terminierte Polymere oder Phenol-terminierte Polymere zu erhalten, wie sie beispielsweise in den folgenden Formel (XIII) und (XIV) wiedergegeben sind:

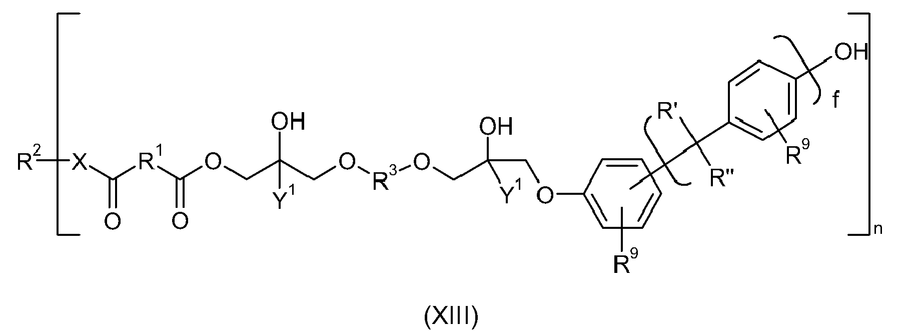

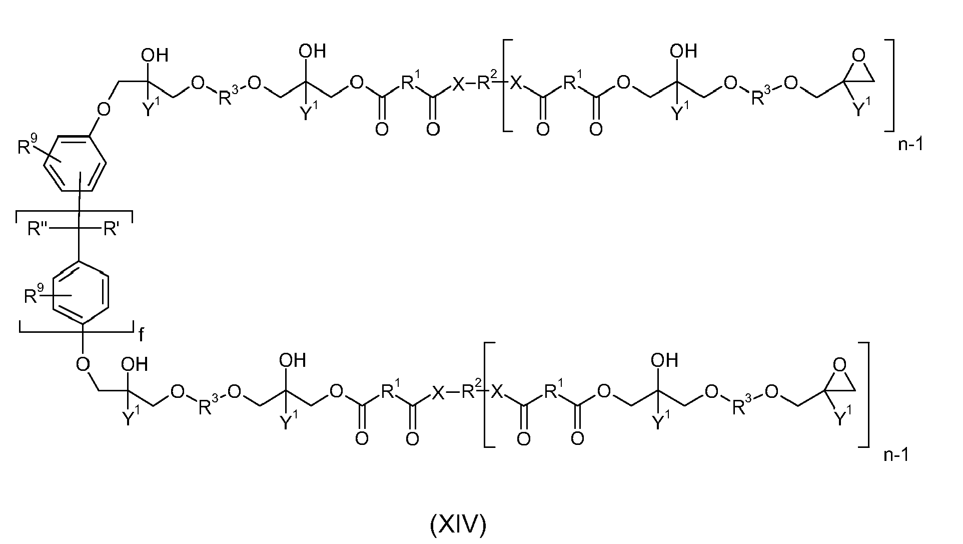

Hierbei steht der Index f für 0 oder 1. R⁹ steht hierbei für H oder einen Alkyl- oder Alkenylresten, insbesondere für einen Allylrest.

Weitere Aspekte sind Umsetzungsprodukte aus dem Carboxylgruppen-terminierte Polymer der Formel (II) mit Diaminen oder (Meth)acrylatfunktionellen Alkoholen oder Glycidylether-funktionellen (Meth)acrylaten, welche insbesondere zu Amingruppen-terminierten Polymeren der Formel (XI), (XI') und (XI"), bzw. zu (Meth)acrylatgruppen-terminierten Polymeren der Formel (XII) und (XII') gemäss dem folgenden beispielhaften Reaktionsschema, führen.

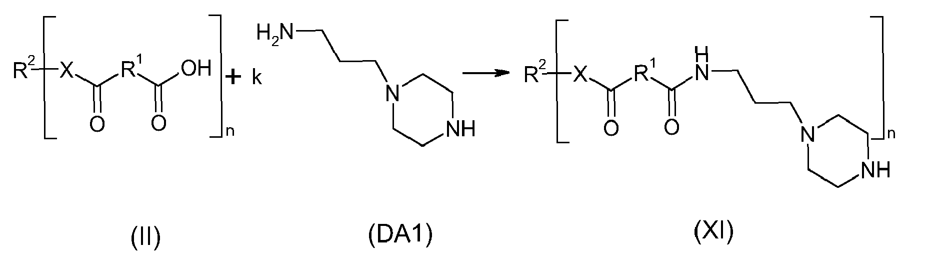

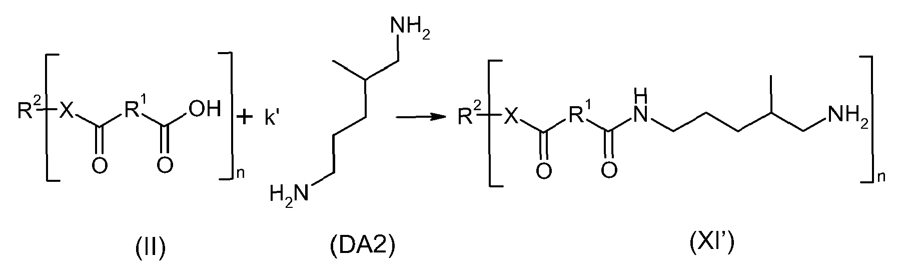

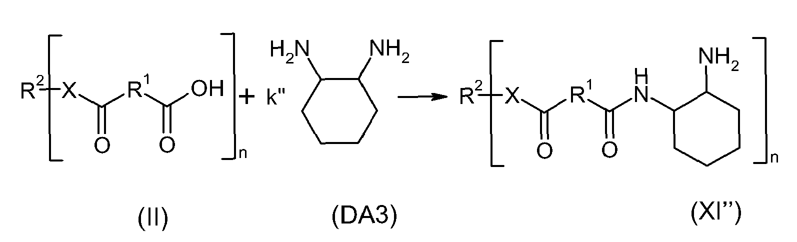

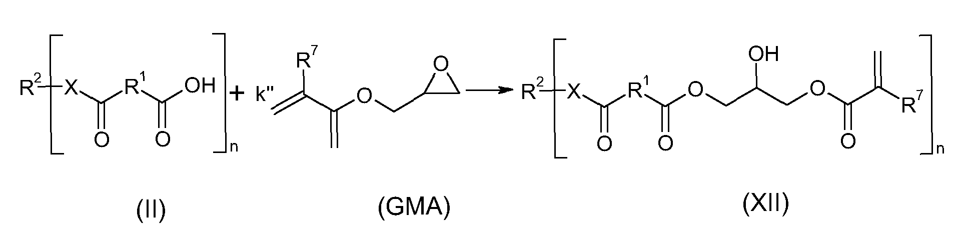

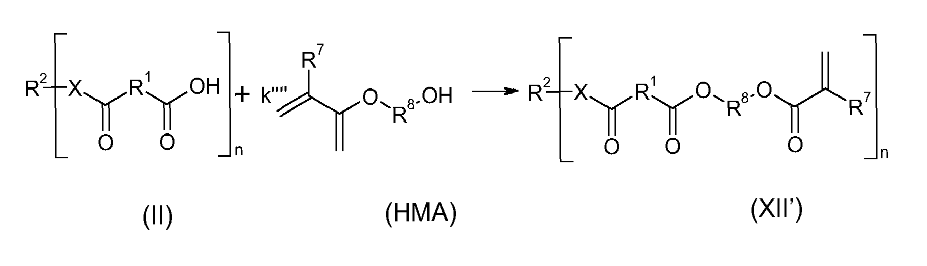

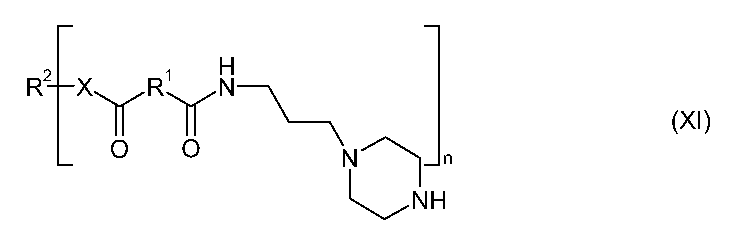

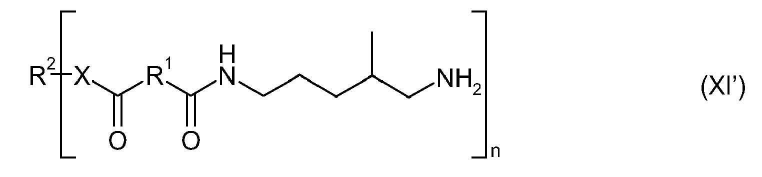

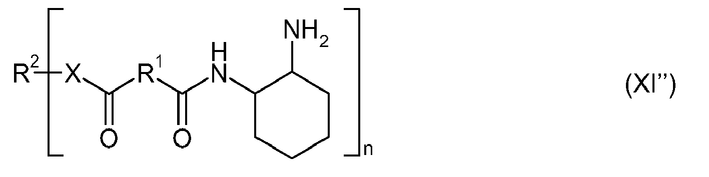

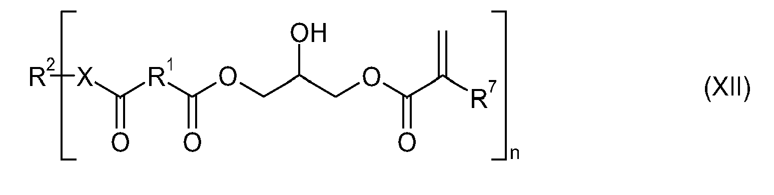

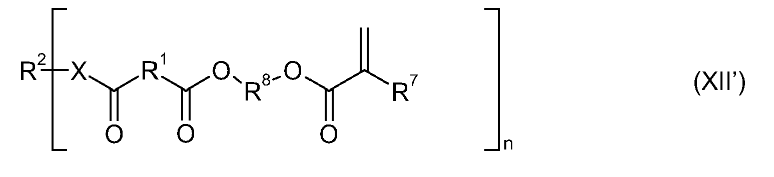

Hierbei steht R⁷ für H oder Methyl und R⁸ steht für einen divalenten Rest, insbesondere für einen Alkylen-, Cycloalkylen- oder (Poly)oxyalkylen-Rest. Die Diamine 1-(2-Aminoethyl)piperazin (DA1), bzw. 2-Methylpentamethylendiamin (DA2), bzw. 1,2-Diaminocyclohexan (DA3), sowie das Glycidyl(meth)acrylat (GMA) und das Hydroxy-funktionelle (Meth)acrylat (HMA) werden jeweils im stöchiometrischen Überschuss verwendet, d.h. k, k', k", k''' und k"" sind jeweils grösser als n.

Die Reaktionsbedingungen zur Bildung von Amiden und Estern sind aus der Literatur bekannt und können auf die Synthese dieser Umsetzungsprodukte, insbesondere der Polymere der Formel (XI), (XI'), (XI"), (XII) und (XII'), übertragen werden.

Somit bildet ein weiterer Aspekt der vorliegenden Erfindung ein Verfahren zur Herstellung eines Endgruppen-terminierten Polymers der Formel (XV), 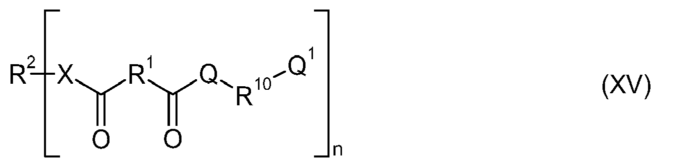 welches die folgenden zwei Schritte umfasst:
a) Vorverlängerung, d.h. Umsetzung einer XH-Gruppen aufweisenden Verbindung XAV der Formel R²(XH)ₙ mit einem stöchiometrischen Überschuss eines Carboxylgruppen-terminierten Butadien/Acrylonitril-Copolymers CTBN der Formel HOOC-R¹-COOH zu einem Carboxylgruppen terminierten Polymer der Formel (II), wie vorgängig bereits beschrieben, derart, dass die XH-Gruppen aufweisende Verbindung XAV und HOOC-R¹-COOH in einer Menge zueinander eingesetzt werden, dass das Verhältnis der COOH-Gruppen zu XH-Gruppen [COOH] / [XH] ≥ 2 ist;
   wobei die XH-Gruppen aufweisende Verbindung XAV und das Carboxylgruppen-terminierten Butadien/Acrylonitril-Copolymer CTBN der Formel HOOC-R¹-COOH wie vorgängig bereits beschrieben wurde, zu wählen sind;
b) Terminierung, d.h. Umsetzung eines Carboxylgruppen-terminierten Polymers der Formel (II) mit einem Diglycidylether oder mit einem Diamin oder mit einem (Meth)acrylat-funktionellen Alkohol oder mit einem Glycidylether-funktionellen (Meth)acrylat derart, dass der Diglycidylether oder das Diamin oder der (Meth)acrylat-funktionelle Alkohol oder das Glycidylether-funktionelle (Meth)acrylat und das Carboxylgruppen-terminierte Polymers der Formel (II) in einer Menge entsprechend einem Molekül Diglycidylether oder Diamin oder (Meth)acrylat-funktioneller Alkohol oder Glycidyletherfunktionelles (Meth)acrylat pro COOH-Gruppe eines Moleküls Carboxylgruppen-terminierten Polymers der Formel (II) zueinander eingesetzt werden.

Hierbei stehen in Formel (XV) R¹⁰ für einen divalenten Rest steht und Q¹ eine Endgruppe ist, welche ausgewählt ist aus der Gruppe bestehend aus der Formel (XVI), (XVI'), (XVI") und -NH₂.

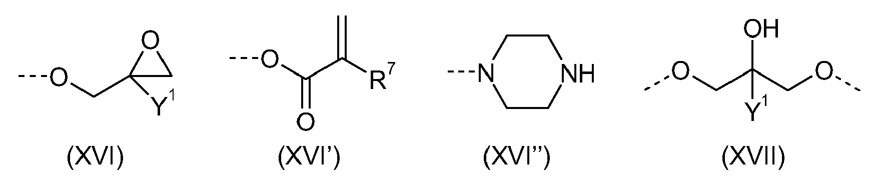

Es gilt die Massgabe, dass
Q für -NH- steht für den Fall,
in dem Q¹ für -NH₂ oder die Formel (XVI") steht, und
Q für -O- oder die Formel (XVII) steht für den Fall,
in dem Q¹ für die Formel (XVI') steht, und
Q für die Formel (XVII) steht für den Fall,
in dem Q¹ für die Formel (XVI) steht.

Als Endgruppen-terminierten Polymere der Formel (XV) gelten insbesondere die vorgängig beschriebenen Epoxidgruppen-terminierten Polymere der Formel (I), Carboxylgruppen-terminierten Polymere der Formel (II), Amingruppen-terminierten Polymere der Formel (XI), (XI') oder (XI") und (Meth)acrylatgruppen-terminierten Polymere der Formel (XII) oder (XII').

Die so hergestellten Carboxylgruppen-terminierten Polymere der Formel (II) und beschriebenen Endgruppen-terminierten Polymere der Formel (XV), insbesondere die Epoxidgruppen-terminierten Polymere der Formel (I), Amingruppen-terminierten Polymere der Formel (XI), (XI') oder (XI") und (Meth)acrylatgruppen-terminierten Polymere der Formel (XII) oder (XII'), können als Mittel zur Erhöhung der Schlagzähigkeit einer Polymermatrix verwendet werden und sind als sogenannte Schlagzähigkeitsmodifikatoren einsetzbar.

Vorzugsweise sind die Carboxylgruppen-terminierten Polymere der Formel (II) und Endgruppen-terminierten Polymere der Formel (XV), insbesondere Epoxidgruppen-terminierten Polymere der Formel (I), Amingruppen-terminierten Polymere der Formel (XI), (XI') oder (XI") und (Meth)acrylatgruppen-terminierten Polymere der Formel (XII) oder (XII'), bei Raumtemperatur flüssig oder viskos bis hochviskos. Bevorzugt sind sie zumindest bei einer Temperatur von 60°C mit den üblichen Mitteln verarbeitbar. Meist bevorzugt sind sie zumindest bei 60°C giessbar oder zumindest von honigartiger Konsistenz. Falls sie hochviskos oder fest sind können sie gegebenenfalls in Lösungsmittel oder Harzen, wie Epoxid-Flüssigharzen gelöst, emulgiert oder dispergiert werden.

Diese Polymeren der Formel (I), (II), (XI), (XI'), (XI"), (XII) und (XII') werden vorzugsweise in vernetzenden Zusammensetzungen verwendet, insbesondere in Systemen, in welche diese Polymere einreagieren können. Somit ist die Frage, in welchen Zusammensetzungen diese Polymere eingesetzt werden, insbesondere abhängig von der Polymermatrix. So werden (Meth)acrylatgruppen-terminierten Polymere der Formel (XII) oder (XII') insbesondere in (Meth)acrylaten oder ungesättigten Polyesterharzen, welche über eine Radikal oder UV-Licht initiierte Polymerisationsreaktion zu einer Polymermatrix vernetzen, bevorzugt eingesetzt.

Epoxidgruppen-terminierte Polymere der Formel (I) sowie Carboxylgruppen-terminierte Polymere der Formel (II) und Amingruppenterminierte Polymere der Formel (XI), (XI') oder (XI") werden bevorzugt in Epoxidharzzusammensetzungen eingesetzt.

Im Falle der Epoxidgruppen-terminierten Polymere der Formel (I) werden sie vorzugsweise in der Komponente eingesetzt, in welcher ein Epoxidharz A vorhanden ist. Das Epoxidharz A kann ein Epoxid-Flüssigharz der Formel (IX) oder ein Epoxid-Festharz der Formel (VIII) sein. In einer Ausführungsform weist die Zusammensetzung neben einem Epoxidharz A einen Härter B für Epoxidharze, welcher durch erhöhte Temperatur aktiviert wird, auf. Derartige Zusammensetzungen werden insbesondere als hitzehärtende Epoxidharzklebstoffe eingesetzt und härten beim Erhitzen auf eine Temperatur, welche über der Hitzeaktivierung des thermisch aktivierbaren Härters B liegt, aus, so dass eine ausgehärtete Zusammensetzung entsteht.

Im Falle der Carboxylgruppen-terminierten Polymere der Formel (II), können sie ebenfalls in der Komponente eingesetzt werden, in welcher ein Epoxidharz A vorhanden ist.

Im Falle der Carboxylgruppen-terminierten Polymere der Formel (II) oder der Amingruppen-terminierten Polymere der Formel (XI), (XI') oder (XI") können sie jedoch auch in einer Härterkomponente eingesetzt werden. Eine derartige Härterkomponente enthält einen Härter für Epoxidharze, wie beispielsweise Polyamine oder Polymercaptane. Durch die Vermischung der zwei Komponenten reagieren diese, insbesondere auch bei Raumtemperatur, miteinander und es entsteht eine ausgehärtete Zusammensetzung.

Derartige Zusammensetzungen lassen sich breit anwenden. Beispiele hierfür sind Klebstoffe, Dichtstoffe, Beschichtungen, Schäume, Strukturschäume, Lacke, Injektionsharze oder Beläge. Sie können beispielsweise im Hoch- oder Tiefbau, in der Fertigung oder Reparatur von industriellen Gütern oder Konsumgütern verwendet werden. Insbesondere bevorzugt werden sie als Klebstoffe verwendet, insbesondere für den Karosseriebau und der Fertigung von Fenstern, Haushaltmaschinen oder Transportmitteln, wie Fahrzeugen zu Wasser oder zu Lande, bevorzugt Automobile, Busse, Lastkraftwagen, Züge oder Schiffe; oder als Dichtstoff zum Abdichten von Fugen, Nähten oder Hohlräumen in der industriellen Fertigung oder Reparatur verwendet.

Insbesondere bevorzugt werden derartige Zusammensetzungen als crashfeste Klebstoffe insbesondere für den Transportmittelbau, bevorzugt im OEM-Bereich von Transportmittelbau, eingesetzt.

Weiterhin bevorzugt werden derartige Zusammensetzungen als hochstrukturelle Klebstoffe für den Hoch- und Tiefbau oder als hochbelastbare Industriebeschichtungen, eingesetzt.

### Beispiele

### Verwendete Rohstoffe

| | |
|---|---|
| Hycar® CTBN 1300X13: | Säurezahl = 32 mg/g KOH = 570 meq/kg |
| | Mw = ca. 3150 g/mol |
| | |
| D.E.R. 331 (Bisphenol-A-Diglycidylether="BADGE"): | 5.40 eq/kg |
| | Mw = ca. 185 g/eq |
| | |
| Epilox F-17-00 (Bisphenol-F-Diglycidylether="BFDGE"): | 5.88 eq/kg |
| | Mw = ca. 170 g/eq |
| | |
| 1,6-Hexandithiol: | Mw = 150.31 g/mol |
| | |
| 1,6-Decandiamin: | Mw = 116.2 g/mol |
| | |
| Bisphenol-A: | Mw = 228.3 g/mol |

### Herstellung von Carboxylgruppen-terminierten Polymeren

### Mit Hexandithiol vorverlängert

300.0 g (171 meq COOH) carboxylterminiertes Acrylnitril/Butadien Copolymer (Hycar® CTBN 1300X13), 3.22g 1,6-Hexandithiol (42.8 meq SH) und 1.0g p-Toluolsulfonsäure Monohydrat (5.3 meq) wurden in einen Planschliffkolben mit Rührer, Stickstoffeinleitung und Vakuumanschluss eingewogen. Das Gemisch wurde unter leichtem Vakuum während 4h bei 150°C bis zur Gewichtskonstanz gerührt. Somit konnte eine viskose Masse mit einer Säurezahl von etwa 24.6 mg/g KOH (ca. 439 meq/kg) erhalten werden. Der Katalysator wurde nicht neutralisiert. Das so erhaltene Produkt wurde als *CTBN1* bezeichnet.

### Mit Hexandiamin vorverlängert

300.0 g(171 meq COOH) carboxylterminiertes Acrylnitril/Butadien Copolymer (Hycar CTBN 1300X13), 1.76g 1,6-Hexandiamin (28.5 meq NH2) und 3.0g n-Butyltitanat wurden in einen Planschliffkolben mit Rührer, Stickstoffeinleitung und Vakuumanschluss eingewogen. Das Gemisch wurde während 4h bei 180°C unter leichtem Vakuum bis zur Gewichtskonstanz gerührt. Somit konnte eine viskose Masse mit einer Säurezahl von etwa 26.2 mg/g KOH (ca. 468 meq/kg) erhalten werden. Das so erhaltene Produkt wurde als *CTBN2* bezeichnet.

### Herstellung von Epoxidgruppen-terminierten Polymeren

### Mit BFDGE terminiert

100.0 g (ca. 42.2 meq COOH) *CTBN1* und 150.0 g (882 meq Epoxy) Epilox F 17-00 wurden in einen Planschliffkolben mit Rührer, Stickstoffeinleitung und Vakuumanschluss eingewogen. Das Gemisch wurde während 3h bei 180°C unter leichtem Vakuum gerührt, bis ein viskoses Epoxidharz mit einem Epoxidgehalt von ca. 3.35 eq/kg erhalten wurde. Das so erhaltene Produkt wurde als *ETBN1* bezeichnet.

### Mit BADGE terminiert

100.0 g (ca. 46.8 meq COOH) *CTBN2* und 150.0 g (810 meq EP) D.E.R. 331 wurden in einen Planschliffkolben mit Rührer, Stickstoffeinleitung und Vakuumanschluss eingewogen. Das Gemisch wurde während 3h bei 180°C unter leichtem Vakuum gerührt, bis ein viskoses Epoxidharz mit einem Epoxidgehalt von ca. 3.05 eq/kg erhalten wurde. Das so erhaltene Produkt wurde als *ET8N2* bezeichnet.

### Mit Bisphenol-A nachverlängertes ETBN1

150.0 g (ca. 503 meq Epoxy) *ETBN1* und 7.5g (ca. 66 meq OH) Bisphenol-A wurden in einen Planschliffkolben mit Rührer, Stickstoffeinleitung und Vakuumanschluss eingewogen. Das Gemisch wurde während 3h bei 180°C unter leichtem Vakuum gerührt, bis ein viskoses Epoxidharz mit einem Epoxidgehalt von ca. 2.77 eq/kg erhalten wurde. Das so erhaltene Produkt wurde als *ETBN3* bezeichnet

### Wirkung als Schlagzähigkeitsmodifikatoren

Die Epoxidgruppen-terminiertes Polymere *ET8N1, ET8N2* und *ET8N3* zeigten in hitzehärtenden Epoxidharzklebstoffen eine markante Erhöhung der Schlagzähigkeit.

## Patentansprüche

1. Epoxidgruppen-terminiertes Polymer der Formel (I) 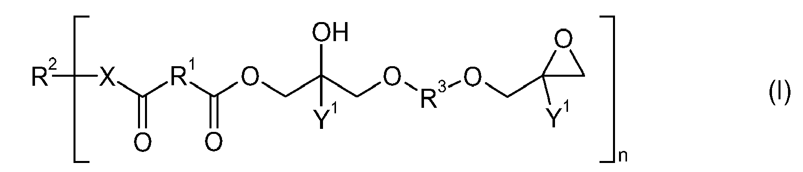 wobei R¹ für einen divalenten Rest eines Carboxylgruppen-terminierten Butadien/Acrylonitril-Copolymers CTBN nach Entfernung der terminalen Carboxylgruppen steht;
R² für einen Rest einer n XH-Gruppen aufweisenden Verbindung XAV, welche ausgewählt ist aus der Gruppe bestehend aus Polyaminen, Polymercaptanen, (Poly)aminoalkoholen, (Poly)mercaptoalkoholen und (Poly)aminomercaptanen, nach Entfernung von n XH- Gruppen steht;
R³ für einen Diglycidylether DGE nach Entfernung der zwei Glycidylether-Gruppen steht;
Y¹ für H oder Methyl steht;
X unabhängig voneinander für S, NH oder NR⁰ oder O steht, mit der Massgabe, dass nur ein X im Molekül für O steht, wobei R° für einen Alkyl-, Cycloalkyl- oder Arylrest mit 1 bis 8 C-Atomen oder für einen zweiwertigen Rest, insbesondere Alkylenrest, welcher mit R² verbunden ist, steht;
und n für einen Wert von 2 bis 4, bevorzugt 2 steht.

2. Epoxidgruppen-terminiertes Polymer gemäss Anspruch 1, **dadurch gekennzeichnet, dass** R¹ die Formel (IV) aufweist 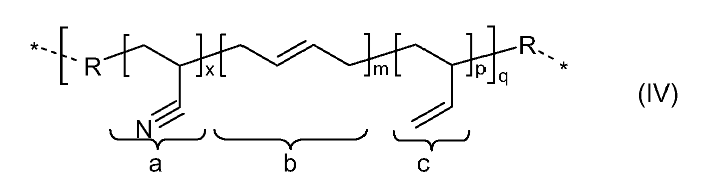 wobei die gestrichelten Linien die Anbindungsstellen der zwei Carboxyl-gruppen darstellen; b und c die Strukturelemente, welche von Butadien stammen, und a das Strukturelement, welches von Acrylonitril stammt, darstellen; R für einen linearen oder verzweigten Alkylenrest mit 1 bis 6 C-Atomen, insbesondere mit 4 C-Atomen, welcher gegebenenfalls mit ungesättigten Gruppen substituiert ist, steht; q ein Wert von 40 bis 100, insbesondere von 50 bis 90, darstellt; x = 0.05 - 0.3, m = 0.5 - 0.8, p = 0.1 - 0.2; unter der Voraussetzung, dass x + m + p = 1 ist.

3. Epoxidgruppen-terminiertes Polymer gemäss Anspruch 1 oder 2, **dadurch gekennzeichnet, dass** R² ein zweiwertiger aliphatischer, cycloaliphatischer oder aromatischer organischer Rest ist, welcher gegebenenfalls O-, N- oder S-Atome, aufweist.

4. Epoxidgruppen-terminiertes Polymer gemäss Anspruch 1 oder 2 oder 3, **dadurch gekennzeichnet, dass** die XH-Gruppen aufweisenden Verbindung XAV ein Polyoxyalkylen-Polyamin mit zwei oder drei Amino-gruppen, insbesondere der Formel (V'), ist 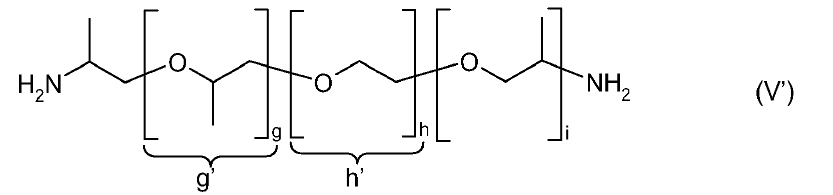 wobei g' das Strukturelement, welches von Propylenoxid stammt, und h' das Strukturelement, welches von Ethylenoxid stammt, darstellen und g, h und i je für Werte von 0 bis 40 stehen, mit der der Massgabe, dass die Summe von g, h und i ≥ 1 ist.

5. Epoxidgruppen-terminiertes Polymer gemäss Anspruch 1 oder 2 oder 3, **dadurch gekennzeichnet, dass** die XH-Gruppen aufweisenden Verbindung XAV ein Polymercaptan ist, insbesondere der Formel (V"), ist 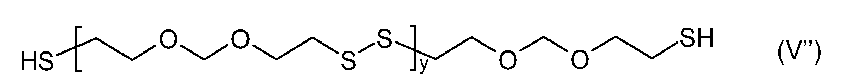 wobei y für einen Wert von 1 bis 45, insbesondere von 5 bis 23, steht.

6. Epoxidgruppen-terminiertes Polymer gemäss einem der Ansprüche 1 - 5, **dadurch gekennzeichnet, dass** R³ die Formel (VI) oder (VI') aufweist 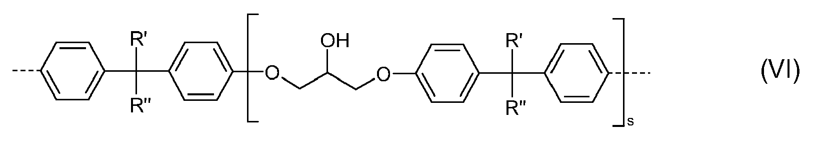 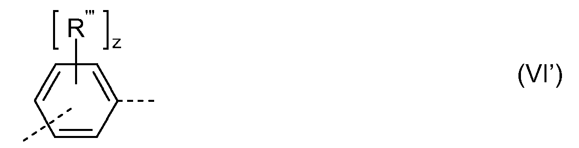 wobei R', R" und R''' unabhängig voneinander für H, Methyl oder Ethyl stehen, z für 0 oder 1 steht und s für 0 oder für einen Wert von 0.1 - 12 steht.

7. Epoxidgruppen-terminiertes Polymer gemäss einem der vorhergehenden Ansprüche, **dadurch gekennzeichnet, dass** der Diglycidylether DGE Bisphenol-F-Diglycidylether ist.

8. Epoxidgruppen-terminiertes Polymer gemäss einem der Ansprüche 1 bis 5, **dadurch gekennzeichnet, dass** der Diglycidylether DGE ein aliphatischer oder cycloaliphatischer Diglycidylether ist, insbesondere ein Diglycidylether der Formel (VI") oder (VI''') ist 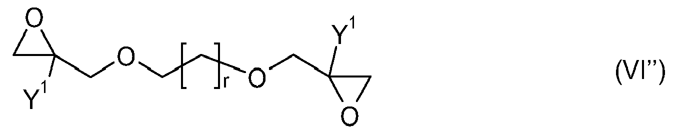 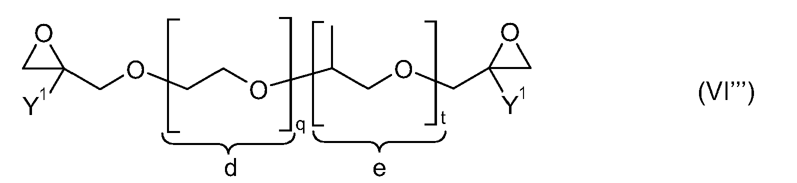 wobei r für einen Wert von 1 bis 9 steht und
d das Strukturelement, welches von Ethylenoxid stammt, und e das Strukturelement, welches von Propylenoxid stammt, darstellen;
q für einen Wert von 0 bis 10 und t für einen Wert von 0 bis 10 steht, mit der Massgabe, dass die Summe von q und t ≥ 1 ist.

9. Epoxidgruppen-terminiertes Polymer gemäss Anspruch 8, **dadurch gekennzeichnet, dass** der Diglycidylether DGE Ethylenglykoldiglycidylether, Butandioldiglycidylether oder Hexandioldiglycidylether ist.

10. Carboxylgruppen-terminiertes Polymer der Formel (II) 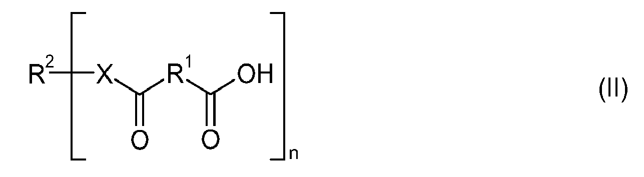 wobei R¹ für einen divalenten Rest eines Carboxylgruppen-terminierten Butadien/Acrylonitril-Copolymers CTBN nach Entfernung der terminalen Carboxylgruppen steht; und
R² für einen Rest einer n XH-Gruppen aufweisenden Verbindung XAV, welche ausgewählt ist aus der Gruppe bestehend aus Polyaminen, Polymercaptanen, (Poly)aminoalkoholen, (Poly)mercaptoalkoholen und (Poly)aminomercaptanen, nach Entfernung von n XH- Gruppen steht;
X unabhängig voneinander für S, NH oder NR⁰ oder O, mit der Massgabe, dass nur ein X im Molekül für O steht, wobei R° für einen Alkyl-, Cycloalkyl- oder Arylrest mit 1 bis 8 C-Atomen oder für einen zweiwertigen Rest, insbesondere Alkylenrest, welcher mit R² verbunden ist, steht;
n für einen Wert von 2 bis 4, bevorzugt 2 steht.

11. Carboxylgruppen-terminiertes Polymer gemäss Anspruch 10, **dadurch gekennzeichnet, dass** R¹ die Formel (IV) aufweist 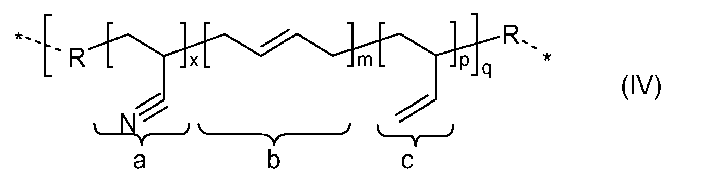 wobei die gestrichelten Linien die Anbindungsstellen der zwei Carboxylgruppen darstellen;
b und c die Strukturelemente, welche von Butadien stammen, und a das Strukturelement, welches von Acrylonitril stammt, darstellen;
R für einen linearen oder verzweigten Alkylenrest mit 1 bis 6 C-Atomen, insbesondere mit 4 C-Atomen, welcher gegebenenfalls mit ungesättigten Gruppen substituiert ist, steht;
q ein Wert von 40 bis 100, insbesondere von 50 bis 90, darstellt;
x=0.05-0.3, m=0.5-0.8, p=0.1-0.2;
unter der Voraussetzung, dass x + m + p = 1 ist.

12. Amingruppen-terminiertes Polymer der Formel (XI) oder (XI') oder (XI") 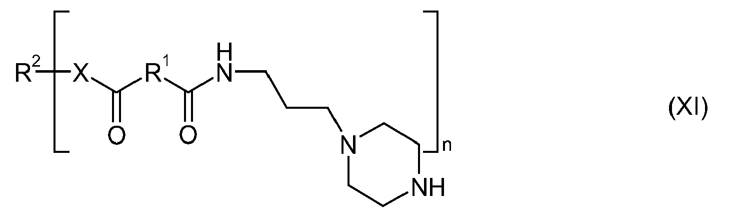 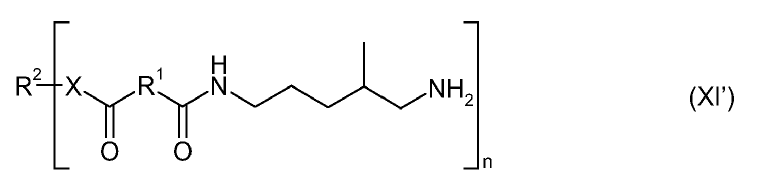 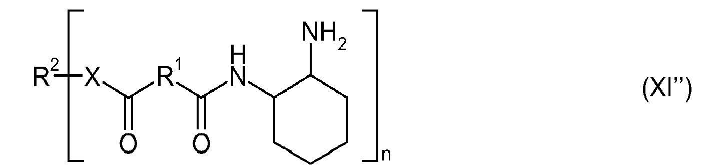 wobei R¹ für einen divalenten Rest eines Carboxylgruppen-terminierten Butadien/Acrylonitril-Copolymers CTBN nach Entfernung der terminalen Carboxylgruppen steht;
R² für einen Rest einer n XH-Gruppen aufweisenden Verbindung XAV, welche ausgewählt ist aus der Gruppe bestehend aus Polyaminen, Polymercaptanen, (Poly)aminoalkoholen, (Poly)mercaptoalkoholen und (Poly)aminomercaptanen, nach Entfernung von n XH- Gruppen steht;
X unabhängig voneinander für S, NH oder NR⁰ oder O, mit der Massgabe, dass nur ein X im Molekül für O steht, wobei R° für einen Alkyl-, Cycloalkyl- oder Arylrest mit 1 bis 8 C-Atomen oder für einen zweiwertigen Rest, insbesondere Alkylenrest, welcher mit R² verbunden ist, steht;
und n für einen Wert von 2 bis 4, bevorzugt 2 steht.

13. (Meth)acrylatgruppen-terminiertes Polymer der Formel (XII) oder (XII') 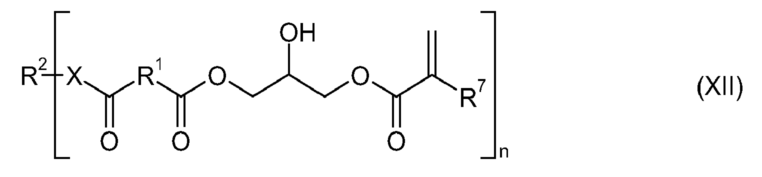 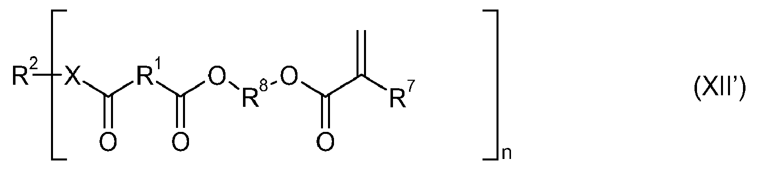 wobei R¹ für einen divalenten Rest eines Carboxylgruppen-terminierten Butadien/Acrylonitril-Copolymers CTBN nach Entfernung der terminalen Carboxylgruppen steht;
R² für einen Rest einer n XH-Gruppen aufweisenden Verbindung XAV, welche ausgewählt ist aus der Gruppe bestehend aus Polyaminen, Polymercaptanen, (Poly)aminoalkoholen, (Poly)mercaptoalkoholen und (Poly)aminomercaptanen, nach Entfernung von n XH- Gruppen steht;
X unabhängig voneinander für S, NH oder NR⁰ oder O, mit der Massgabe, dass nur ein X im Molekül für O steht, wobei R° für einen Alkyl-, Cycloalkyl- oder Arylrest mit 1 bis 8 C-Atomen oder für einen zweiwertigen Rest, insbesondere Alkylenrest, welcher mit R² verbunden ist, steht;
R⁷ für H oder Methyl steht;
R⁸ für einen divalenten Resten, insbesondere für einen Alkylen-, Cycloalkylen- oder (Poly)oxyalkylen-Resten, steht und
n für einen Wert von 2 bis 4, bevorzugt 2 steht.

14. Verfahren zur Herstellung eines Carboxylgruppen-terminierten Polymers gemäss Anspruch 10 oder 11 durch eine Umsetzung einer XH-Gruppen aufweisenden Verbindung XAV der Formel R²(XH)ₙ mit einem Carboxylgruppen-terminierten Butadien/Acrylonitril-Copolymers CTBN der Formel HOOC-R¹-COOH, **dadurch gekennzeichnet, dass** für diese Umsetzung R²(XH)ₙ und HOOC-R¹-COOH in einer Menge zueinander eingesetzt werden entsprechend einem stöchiometrischen Verhältnis der COOH-Gruppen zu XH-Gruppen [COOH] / [XH] von ≥ 2.

15. Verfahren zur Herstellung eines Epoxidgruppen-terminierten Polymers gemäss einem der Ansprüche 1 bis 9 durch eine Umsetzung eines Carboxylgruppen-terminierten Polymers der Formel (II) gemäss Anspruch 10 oder 11 mit einem Diglycidylether der Formel (III), **dadurch gekennzeichnet, dass** für diese Umsetzung das Polymer der Formel (II) und der Diglycidylether der Formel (III) in einer Menge zueinander eingesetzt werden entsprechend einem stöchiometrischen Verhältnis der Glycidylethergruppen zu 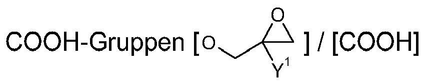 von ≥ 2.

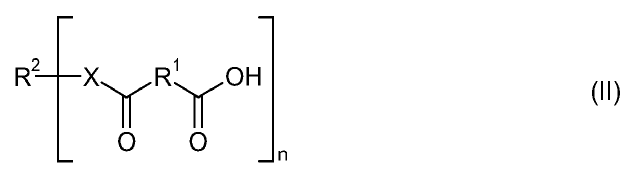

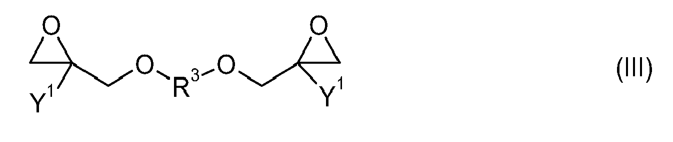

16. Verfahren zur Herstellung eines Endgruppen-terminierten Polymers der Formel (XV) 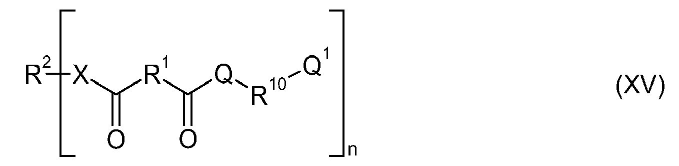 umfassend die folgenden zwei Schritte
a) Vorverlängerung, d.h. Umsetzung einer XH-Gruppen aufweisenden Verbindung XAV der Formel R²(XH)ₙ mit einem stöchiometrischen Überschuss eines Carboxylgruppen-terminierten Butadien/Acrylonitril-Copolymers CTBN der Formel HOOC-R¹-COOH zu einem Carboxylgruppen terminierten Polymer der Formel (II) gemäss Anspruch 10 oder 11, derart, dass die XH-Gruppen aufweisende Verbindung XAV und HOOC-R¹-COOH in einer Menge zueinander eingesetzt werden, dass das Verhältnis der COOH-Gruppen zu XH-Gruppen [COOH] / [XH] ≥ 2 ist;
wobei die XH-Gruppen aufweisende Verbindung XAV und das Carboxylgruppen-terminierte Butadien/Acrylonitril-Copolymer CTBN der Formel HOOC-R¹-COOH wie in den Ansprüchen 1 bis 9 beschrieben, zu wählen sind;
b) Terminierung, d.h. Umsetzung eines Carboxylgruppen-terminierten Polymers der Formel (II) mit einem Diglycidylether oder mit einem Diamin oder mit einem (Meth)acrylat-funktionellen Alkohol oder mit einem Glycidylether-funktionellen (Meth)acrylat derart, dass der Diglycidylether oder das Diamin oder der (Meth)acrylat-funktionelle Alkohol oder das Glycidylether-funktionelle (Meth)acrylat und das Carboxylgruppen-terminierte Polymers der Formel (II) in einer Menge entsprechend einem Molekül Diglycidylether oder Diamin oder (Meth)acrylat-funktioneller Alkohol oder Glycidyletherfunktionelles (Meth)acrylat pro COOH-Gruppe eines Moleküls Carboxylgruppen-terminierten Polymers der Formel (II) zueinander eingesetzt werden;
wobei in Formel (XV) R¹⁰ für einen divalenten Rest steht und Q¹ eine Endgruppe ist, welche ausgewählt ist aus der Gruppe bestehend aus der Formel (XVI), (XVI'), (XVI") und -NH₂ 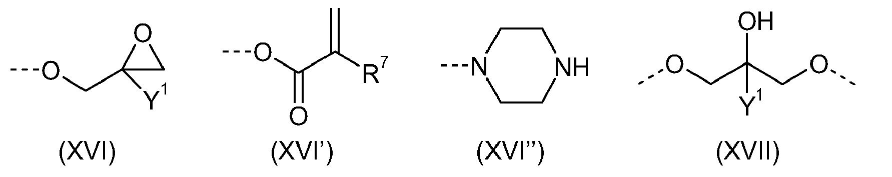 mit der Massgabe, dass
Q für -NH- steht für den Fall,
in dem Q¹ für -NH₂ oder die Formel (XVI") steht, und
Q für -O- oder die Formel (XVII) steht für den Fall,
in dem Q¹ für die Formel (XVI') steht, und
Q für die Formel (XVII) steht für den Fall,
in dem Q¹ für die Formel (XVI) steht.

17. Verwendung eines Carboxylgruppen-terminierten Polymers der Formel (II) gemäss Anspruch 10 oder 11, eines Endgruppen-terminierten Polymers der Formel (XV), hergestellt nach einem Verfahren gemäss Anspruch 16, insbesondere eines Epoxidgruppen-terminiertes Polymers der Formel (I) gemäss einem der Ansprüche 1 - 9 oder eines Amingruppen-terminierten Polymers der Formel (XI) oder (XI') oder (XI") gemäss Anspruch 12 oder eines (Meth)acrylatgruppen-terminierten Polymers der Formel (XII) oder (XII') gemäss Anspruch 13, als Mittel zur Erhöhung der Schlagzähigkeit einer Polymermatrix.

18. Verwendung gemäss Anspruch 17, **dadurch gekennzeichnet, dass** die Polymermatrix eine Epoxidharzmatrix ist.

19. Zusammensetzung enthaltend ein Amingruppen-terminiertes Polymer der Formel (XI) oder (XI') oder (XI") gemäss Anspruch 12 oder ein (Meth)acrylatgruppen-terminiertes Polymer der Formel (XII) oder (XII') gemäss Anspruch 13.

20. Zusammensetzung enthaltend ein Epoxidgruppen-terminiertes Polymer der Formel (I) gemäss einem der Ansprüche 1 - 9 oder ein Carboxylgruppen-terminiertes Polymers der Formel (II) gemäss Anspruch 10 oder 11.

21. Zusammensetzung gemäss Anspruch 20, **dadurch gekennzeichnet, dass** die Zusammensetzung weiterhin mindestens ein Epoxidharz A enthält.

22. Zusammensetzung gemäss Anspruch 21, **dadurch gekennzeichnet, dass** die Zusammensetzung weiterhin einen Härter B für Epoxidharze, welcher durch erhöhte Temperatur aktiviert wird, enthält.

23. Ausgehärtete Zusammensetzung erhalten aus einer Zusammensetzung gemäss Anspruch 21 und einer Beimischung eines Härters für Epoxidharze.

24. Ausgehärtete Zusammensetzung erhalten aus Erhitzung einer Zusammensetzung gemäss Anspruch 22 auf eine Temperatur, welche über der Hitzeaktivierung des thermisch aktivierbaren Härters B liegt.
